# EUROPÄISCHE PATENTSCHRIFT

(11) **EP 2 975 280 B1**
(45) Veröffentlichungstag und Bekanntmachung des Hinweises auf die Patenterteilung: **07.08.2019**
(21) Anmeldenummer: 15173191.6
(22) Anmeldetag: 22.06.2015
(51) Int. Cl.: F16D 13/70, F16D 13/58

(54) **DRUCKPLATTENBAUGRUPPE MIT ANPRESSPLATTE FÜR EINE KUPPLUNGSVORRICHTUNG**
PRESSURE PLATE ASSEMBLY WITH PRESSURE PLATE FOR A COUPLING DEVICE
SOUS-ENSEMBLE À PLAQUE DE PRESSION AVEC PLAQUE DE PRESSAGE POUR UN DISPOSITIF DE COUPLAGE

(30) Priorität: 14.07.2014 DE 102014213645
(43) Veröffentlichungstag der Anmeldung: 20.01.2016
(73) Patentinhaber: Schaeffler Technologies AG & Co. KG, 91074 Herzogenaurach (DE)
(72) Erfinder: Bulut, Faruk, 77933 Lahr (DE)

(56) Entgegenhaltungen:
- EP-A1- 0 195 274
- DE-A1- 2 845 855
- DE-A1- 4 421 679
- DE-A1- 19 721 237
- US-B1- 6 311 816

## Beschreibung

Die Erfindung betrifft eine Druckplattenbaugruppe mit einer Anpressplatte für eine Kupplungsvorrichtung gemäß dem Oberbegriff des Patentanspruchs 1.

Aus dem Stand der Technik ist eine Vielzahl von Kupplungsvorrichtungen mit Anpressplatten bekannt.

Die bekannten Druckplattenbaugruppen weisen einen Kupplungsdeckel und eine innerhalb des Kupplungsdeckels angeordnete verlagerbare Anpressplatte mit Anpressplattennocken zur reibschlüssigen Klemmung einer Kupplungsscheibe zwischen der Anpressplatte und einer Gegendruckplatte auf.

Nachteilig am Stand der Technik ist, dass bei der Herstellung der Anpressplatten große Umformgrade notwendig sind und dadurch die Blechdicke aus fertigungstechnischen Gründen beschränkt ist. Ferner sind die bekannten Anpressplatten lediglich für Kupplungsgrößen bis zu 200 mm (bezogen auf die Reibfläche) ausgelegt.

Insbesondere ist aus der DE 197 21 237 A1 eine Druckplattenbaugruppe bekannt, die auf den Oberbegriff des Patentanspruchs 1 lesbar ist.

Es besteht die technische Aufgabe, eine Druckplattenbaugruppe aufweisend eine Anpressplatte anzugeben, die die Nachteile aus dem Stand der Technik überwindet. Die Aufgabe wird erfindungsgemäß gelöst durch eine Druckplattenbaugruppe gemäß Patentanspruch 1. Bevorzugte Ausführungsbeispiele sind in den abhängigen Patentansprüchen dargelegt.

Insbesondere ist eine Anpressplatte zum Verpressen einer Kupplungsscheibe in einer Kupplungsvorrichtung vorgesehen, wobei die Anpressplatte eine Grundplatte mit Blattfederlaschenabschnitten und einen Nockenring mit Blattfederlaschenabschnitten aufweist, wobei die Grundplatte und der Nockenring über die Blattfederlaschenabschnitte miteinander verbindbar sind.

Durch das Vorsehen der Blattfederlaschenabschnitte der Grundplatte und der Blattfederlaschenabschnitte des Nockenrings wird eine zweiteilig ausbildbareAnpressplatte bereitgestellt. Über die Blattfederlaschenabschnitte lässt sich eine feste Verbindung zwischen der Grundplatte und dem Nockenring ausbilden. Die Dicke der Grundplatte kann bei der Herstellung konstant gehalten werden, wobei die Höhe des Nockenrings entsprechend der Verwendung der Anpressplatte variierbar ist.

Vorzugsweise ist die Grundplatte eine Blechplatte. Bevorzugt ist die Grundplatte annähernd ring-förmig ausgebildet.

Besonders bevorzugt wird die Grundplatte bei ihrer Herstellung gestanzt und weist eine Dicke von 6 bis 9 mm auf. Hierdurch kann eine entsprechend höhere Krafteinwirkung, die auf die Grundplatte einwirkt, von der Grundplatte aufgenommen werden.

Vorzugsweise besteht der Nockenring aus Blech. Bevorzugt ist der Nockenring annähernd ring-förmig ausgebildet.

Bevorzugt ist die Kupplungsvorrichtung als Reibungskupplung ausgebildet. Besonders bevorzugt ist die Anpressplatte für Kupplungsvorrichtung vorgesehen, die größer als 200 mm (bezogen auf eine Reibfläche) ausgestaltet sind.

Sobald die Kupplungsscheibe in einem eingerückten Zustand der Kupplungsvorrichtung zwischen der zweiteilig ausgebildeten Anpressplatte und der Gegendruckplatte verspannt ist, erfolgt eine reibschlüssige Übertragung des Drehmoments von einer Eingangsseite der Kupplungsvorrichtung, d.h. von einer Abtriebsseite des Verbrennungsmotors bzw. einem zwischengeschalteten Drehschwingungsdämpfer, bspw. einem Zweimassenschwungrad, über die Gegendruckplatte und die Anpressplatte auf die Kupplungsscheibe, und von der Kupplungsscheibe auf eine Ausgangsseite der Kupplungsvorrichtung, bspw. auf die Eingangswelle eines Getriebes.

In einer weiteren Ausführungsform sind Verbindungsmittel vorgesehen, um eine Verbindung der Blattfederlaschenabschnitte der Grundplatte und der Blattfederlaschenabschnitte des Nockenrings zu ermöglichen.

Dabei sind die Blattfederlaschenabschnitte eingerichtet, die beiden Bauteile Grundplatte und Nockenring zur zweiteilig ausgebildeten Anpressplatte zu verbinden.

Bevorzugt sind die Verbindungsmittel Niete, insbesondere Blattfederniete.

In einer weiteren Ausführungsform sind die Blattfederlaschenabschnitte der Grundplatte in radialer Richtung entlang der äußeren Mantelfläche der Grundplatte angeordnet und die Blattfederlaschenabschnitte des Nockenrings sind in radialer Richtung entlang der äußeren Mantelfläche des Nockenrings angeordnet.

Bevorzugt sind die Blattfederabschnitte symmetrisch über die Mantelflächen verteilt angeordnet. Besonders bevorzugt sind mindestens jeweils drei Blattfederlaschenabschnitte an der Grundplatte und dem Nockenring angeordnet.

In einer weiteren Ausführungsform liegen die Blattfederlaschenabschnitte der Grundplatte und die Blattfederlaschenabschnitte des Nockenrings in einem zusammengesetzten Zustand der Grundplatte mit dem Nockenring aufeinander.

Auf diese Weise lässt sich die Grundplatte mittels der Verbindungsmittel mit dem Nockenring zur Anpressplatte verbinden.

In einer weiteren Ausführungsform sind die Verbindungsmittel in Aussparungen der Blattfederlaschenabschnitte einbringbar, um die Grundplatte mit dem Nockenring zu verbinden.

Auf diese Weise lässt sich eine einfach ausführbare Verbindung erreichen.

Bevorzugt sind die Aussparungen für die Verbindungsmittel kreisrunde Bohrungen oder Stanzlöcher.

In einer weiteren Ausführungsform sind die Verbindungsmittel Blattfederniete.

Bevorzugt sind die Blattfederniete eingerichtet, den Nockenring zwischen Blattfedern und der Grundplatte einzuspannen.

In einer weiteren Ausführungsform weist der Nockenring einen annähernd L-förmigen Querschnitt auf.

Bevorzugt wird der Nockenring mittels eines Press- oder Ziehverfahrens geformt, um den L-förmige Querschnitt auszubilden. Damit ist der Nockenring bei seiner Herstellung einfach herstellbar.

In einer weiteren Ausführungsform weist der L-förmige Querschnitt zwei Schenkel auf, die einen Winkel größer gleich 90° einschließen.

Bevorzugt ist der Winkel zwischen 95° und 125°, besonders bevorzugt bei 100°. Besonders bevorzugt liegt einer der Schenkel auf einem Teilbereich der Grundplatte auf.

Somit ist die Druckplattenbaugruppe mit zumindest einem Kupplungsdeckel, zumindest einer zumindest teilweise innerhalb des Kupplungsdeckels angeordneten, in axialer Richtung der Druckplattenbaugruppe begrenzt verlagerbaren Anpressplatte zur reibschlüssigen Klemmung einer Kupplungsscheibe zwischen der Anpressplatte und einer Gegendruckplatte, und zumindest einem Hebelelement, das mittels einer Schwenklagerung verkippbar am Kupplungsdeckel gelagert ist, ausgestattet, wobei die Anpressplatte eine Grundplatte mit Blattfederlaschenabschnitten und einen Nockenring mit Blattfederlaschenabschnitten aufweist, wobei die Grundplatte und der Nockenring über die Blattfederlaschenabschnitte miteinander verbindbar sind.

In einer weiteren Ausführungsform ist in einem montierten Zustand der Anpressplatte der Nockenring zwischen Blattfedern und der Grundplatte angeordnet.

Vorzugsweise weist die Druckplattenbaugruppe eine Anzahl an Blattfedern auf. Die Anzahl der Blattfedern entspricht der Anzahl der Blattfederlaschenabschnitte des Nockenrings. Im montierten Zustand sind die Blattfederniete bevorzugt durch die Blattfederlaschenabschnitte des Nockenrings, der Grundplatte und durch die Blattfedern geführt. Hierdurch erfährt der Nockenring eine Sicherung in radialer Richtung mit der Stahlanpressplatte.

Auf diese Weise wird eine Druckplattenbaugruppe für eine Kupplungsvorrichtung bereitgestellt, die die Nachteile aus dem Stand der Technik überwindet.

Eine Sicherung des Nockenrings in axialer Richtung ist mittels einer vom Hebelelement erzeugten Tellerfederkraft realisierbar. Damit macht die Sicherung des Nockenrings keine zusätzlichen Bauteile mehr notwendig.

Die Erfindung wird nun beispielhaft durch Figuren veranschaulicht. Es zeigen:
**Fig. 1** eine schematische Ansicht auf eine Anpressplatte,
**Fig. 2** eine schematische Ansicht auf eine Anpressplatte aus Fig. 1,
**Fig. 3** eine schematische Ansicht auf einen Nockenring aus Fig. 1 und
**Fig. 4** einen schematischen Schnitt durch einen Teilbereich einer Druckplattenbaugruppe einer Kupplungsvorrichtung im geschlossenen, momentübertragenden Zustand.

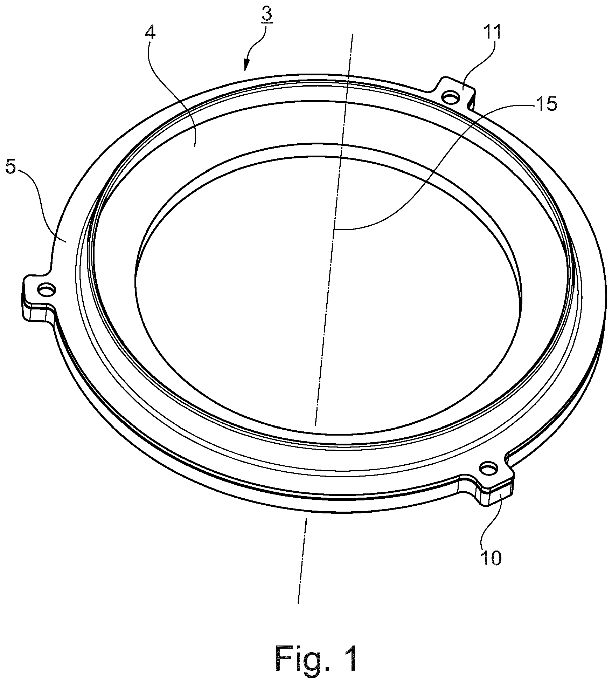

**Fig. 1** zeigt eine schematische Ansicht auf eine Anpressplatte.

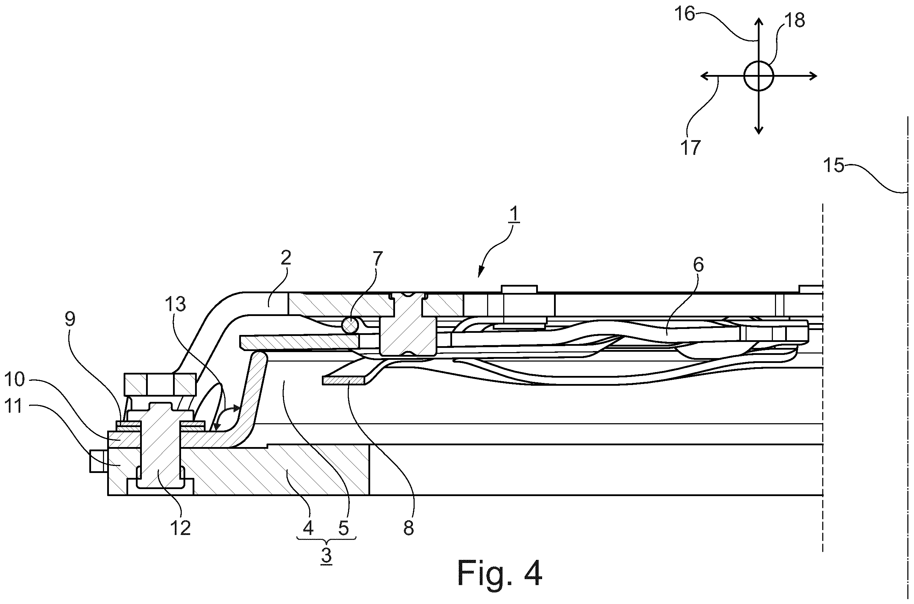

Die Anpressplatte 3 ist zweiteilig ausgebildet. Die Anpressplatte 3 weist einen ersten Teil, der als Grundplatte 4 ausgebildet ist und einen zweiten Teil, der als Nockenring 5 ausgebildet ist auf. Der Nockenring 5 ist mittels Verbindungsmitteln (wie in Fig. 4 dargestellt) mit der Grundplatte 4 verbindbar.

Vorzugsweise ist die Grundplatte 4 als eine Blechplatte ausgebildet. Die Grundplatte 4 ist Ring-förmig ausgebildet. Die Grundplatte 4 wird bei ihrer Herstellung gestanzt.Vorzugsweise besteht der Nockenring 5 aus Blech. Der Nockenring 5 ist durchgehend Ring-förmig ausgebildet.

Die Grundplatte 4 und der Nockenring 5 sind koaxial zueinander angeordnet, wobei ein Teilbereich des Nockenrings 5 plan auf einem äußeren Randbereich der Grundplatte 4 aufliegt. Die Grundplatte 4 und der Nockenring 5 weisen eine gemeinsame Drehachse 15 auf.

Die Grundplatte 4 weist (erste) Blattfederlaschenabschnitte 10 auf. Ferner weist der Nockenring 5 (zweite) Blattfederlaschenabschnitte 11 auf.

Die Blattfederlaschenabschnitte10 erstrecken sich in radialer Richtung entlang der äußeren Mantelfläche der Grundplatte 4. Die Blattfederlaschenabschnitte 11 erstrecken sich ebenfalls in radialer Richtung entlang der äußeren Mantelfläche des Nockenrings 5.

Die Blattfederlaschenabschnitte 10, 11 weisen Aussparungen auf, die eingerichtet sind Verbindungsmittel 12, wie in Fig. 4 dargestellt aufzunehmen. Mittels der Verbindungsmittel 12 ist die Grundplatte 4 mit dem Nockenring 5 verbindbar.

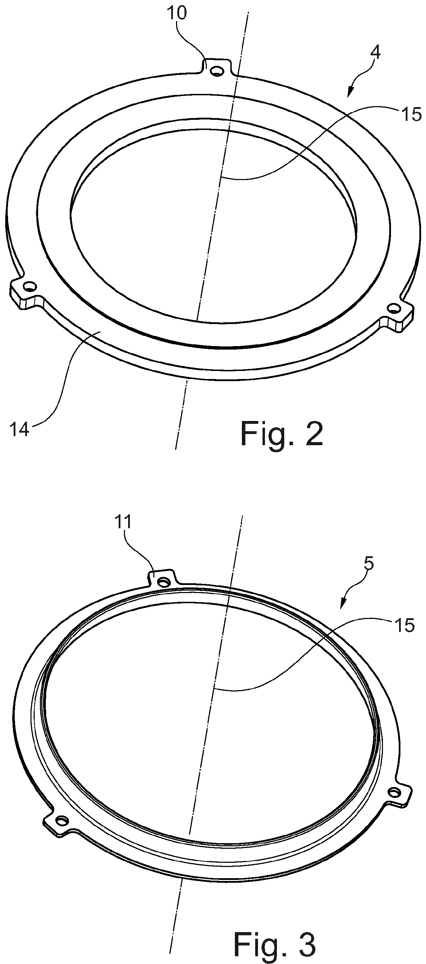

**Fig. 2** zeigt eine schematische Ansicht auf eine Anpressplatte aus Fig. 1.

Die Grundplatte 4 weist, wie bereits erwähnt, die Blattfederlaschenabschnitte 10 auf.

Die Blattfederlaschenabschnitte 10 erstrecken sich in radialer Richtung entlang der äußeren Mantelfläche der Grundplatte 4. Es sind drei Blattfederlaschenabschnitte 10 entlang der äußeren Mantelfläche der Grundplatte 4 in einem Winkel von 120° bzgl. der Drehachse 15 angeordnet.

**Fig. 3** zeigt eine schematische Ansicht auf einen Nockenring aus Fig. 1.

Der Nockenring 5 weist, wie bereits erwähnt, Blattfederlaschenabschnitte 11 auf. Die Blattfederlaschenabschnitte 11 erstrecken sich in radialer Richtung entlang der äußeren Mantelfläche des Nockenrings 5. Es sind drei Blattfederlaschenabschnitte 11 entlang der äußeren Mantelfläche des Nockenrings 5 in einem Winkel von 120° bzgl. der Drehachse 15 angeordnet.

Ferner weist die Grundplatte 4 einen vertieften Teilbereich 14 auf. Der Teilbereich 14 ist eingerichtet, den Nockenring 5 zumindest teilweise aufzunehmen.

**Fig. 4** zeigt einen schematischen Schnitt durch einen Teilbereich einer Druckplattenbaugruppe einer Kupplungsvorrichtung im geschlossenen, momentübertragenden Zustand.

Die Druckplattenbaugruppe 1 weist zumindest einen Kupplungsdeckel 2, zumindest eine zumindest teilweise innerhalb des Kupplungsdeckels 2 angeordnete, in axialer Richtung 16 der Druckplattenbaugruppe 1 begrenzt verlagerbare Anpressplatte 3 zur reibschlüssigen Klemmung einer Kupplungsscheibe (nicht dargestellt) zwischen der Anpressplatte 3 und einer Gegendruckplatte (nicht dargestellt), und zumindest ein Hebelelement 6 (=Tellerfeder) auf, das mittels einer Schwenklagerung verkippbar am Kupplungsdeckel 2 gelagert ist.

Bei eingerückter Kupplungsvorrichtung wird ein Drehmoment von einer Eingangsseite (nicht dargestellt) über die Gegendruckplatte sowie die Anpressplatte 3 reibschlüssig auf die Kupplungsscheibe übertragen. Von der Kupplungsscheibe wird das Drehmoment zu einer Ausgangsseite (nicht dargestellt) übertragen, insbesondere zu einer Eingangswelle des Getriebes.

Die Schwenklagerung ist für das Hebelelement 6 durch ein deckelseitiges Lager 7 und ein anpressplattenseitiges Lager 9 ausgebildet. Das deckelseitige Lager 7 ist als Drahtring ausgebildet. Das anpressplattenseitige Lager 9 ist als Stützring ausgebildet. Zwischen den Lagern 7 und 9 ist das Hebelelement 6 drehbar gelagert.

Die Anpressplatte 3 weist, wie unter Fig. 1 beschrieben, eine Grundplatte 4 und einen Nockenring 5 auf, der mittels Verbindungsmitteln 12 mit der Anpressplatte verbindbar ist.

Die Verbindungsmittel 12 sind als Blattfederniete ausgebildet. Insgesamt sind drei in Umfangsrichtung 18 der Druckplattenbaugruppe 1 angeordnete Blattfederniete vorgesehen, um eine feste Verbindung der Grundplatte 4 mit dem Nockenring 5 zu erzielen.

Der Nockenring 5 weist einen annähernd L-förmigen Querschnitt auf. Der L-förmige Querschnitt weist zwei Schenkel auf, die einen Winkel 13 von 100° zueinander einschließen. Ein erster Schenkel liegt plan auf der Grundplatte 4 auf. Ein zweiter Schenkel orientiert sich in axialer Richtung 16 hin zum Hebelelement 6.

Ferner weist die Druckplattenbaugruppe 1 eine Anzahl an Blattfedern 9 auf. Die Anzahl der Blattfedern 9 entspricht der Anzahl der Blattfederlaschenabschnitte des Nockenrings 5. Im montierten Zustand sind die Blattfederniete 9 bevorzugt durch die Blattfederlaschenabschnitte des Nockenrings 5, der Grundplatte 4 und durch die Blattfedern 9 geführt. Hierdurch erfährt der Nockenring eine Sicherung in radialer Richtung mit der Stahlanpressplatte.

Der Nockenring 4 erfährt so eine Sicherung in radialer Richtung 17 mit der Grundplatte 3. Eine Sicherung des Nockenrings 4 in axialer Richtung 16 ist mittels einer vom Hebelelement 6 erzeugten Tellerfederkraft realisierbar.

Durch das Vorsehen der Blattfederlaschenabschnitte der Grundplatte und der Blattfederlaschenabschnitte des Nockenrings wird eine zweiteilig ausbildbare Anpressplatte bereitgestellt. Über die Blattfederlaschenabschnitte lässt sich eine feste Verbindung zwischen der Grundplatte und dem Nockenring ausbilden. Die Dicke der Grundplatte kann bei der Herstellung konstant gehalten werden, wobei die Höhe des Nockenrings entsprechend der Verwendung der Anpressplatte variierbar ist.

Zusammenfassend ist in **Fig. 4** eine 1. Druckplattenbaugruppe 1 mit zumindest einem Kupplungsdeckel 2, zumindest einer zumindest teilweise innerhalb des Kupplungsdeckels 2 angeordneten, über Blattfedern 9 drehfest angebundenen und in axialer Richtung 16 der Druckplattenbaugruppe 1 begrenzt verlagerbaren Anpressplatte 3 zur reibschlüssigen Klemmung einer Kupplungsscheibe zwischen der Anpressplatte 3 und einer Gegendruckplatte, und zumindest einem Hebelelement 6, das mittels einer Schwenklagerung verkippbar am Kupplungsdeckel 2 gelagert ist, dargestellt. Über die Blattfedern 9 kann die drehfeste Anbindung der Anpressplatte 3 an den Kupplungsdeckel 2 oder an die Gegendruckplatte erfolgen.

Die Anpressplatte 3 weist eine Grundplatte 4 mit ersten Blattfederlaschenabschnitten 10 und einen Nockenring 5 mit zweiten Blattfederlaschenabschnitten 11 auf, wobei zumindest eine der Blattfedern 9 an einem ihrer Enden mit zumindest einem der erster Blattfederlaschenabschnitte 10 und zumindest einem der zweiten Blattfederlaschenabschnitte 11 der Anpressplatte 3 fest verbunden ist.

### Bezugszeichenliste

- 1: Druckplattenbaugruppe
- 2: Kupplungsdeckel
- 3: Anpressplatte
- 4: Grundplatte
- 5: Nockenring
- 6: Hebelelement
- 7: deckelseitiges Lager
- 8: anpressplattenseitiges Lager
- 9: Blattfeder
- 10: Blattfederlaschenabschnitt
- 11: Blattfederlaschenabschnitt
- 12: Verbindungsmittel (Blattfederniet)
- 13: Winkel
- 14: Bereich
- 15: Drehachse
- 16: axiale Richtung
- 17: radiale Richtung
- 18: Umfangsrichtung

## Patentansprüche

1. Druckplattenbaugruppe (1) mit zumindest einem Kupplungsdeckel (2), zumindest einer zumindest teilweise innerhalb des Kupplungsdeckels (2) angeordneten, über Blattfedern (9) drehfest angebundenen und in axialer Richtung (16) der Druckplattenbaugruppe (1) begrenzt verlagerbaren Anpressplatte (3) zur reibschlüssigen Klemmung einer Kupplungsscheibe zwischen der Anpressplatte (3) und einer Gegendruckplatte, und zumindest einem Hebelelement (6), das mittels einer Schwenklagerung verkippbar am Kupplungsdeckel (2) gelagert ist, wobei die Anpressplatte (3) eine Grundplatte (4) mit ersten Blattfederlaschenabschnitten (10) aufweist, **dadurch gekennzeichnet, dass** die Anpressplatte (3) ferner einen Nockenring (5) mit zweiten Blattfederlaschenabschnitten (11) aufweist, wobei zumindest eine der Blattfedern (9) mit zumindest einem der ersten Blattfederlaschenabschnitte (10) und zumindest einem der zweiten Blattfederlaschenabschnitte (11) der Anpressplatte (3) fest verbunden ist.

2. Druckplattenbaugruppe (1) gemäß Anspruch 1, wobei die Verbindung der Blattfeder (9) mit dem ersten Blattfederlaschenabschnitt (10) und dem zweiten Blattfederlaschenabschnitt (11) der Anpressplatte (3) durch ein Verbindungsmittel (12) erfolgt.

3. Druckplattenbaugruppe (1) gemäß einem der vorherigen Ansprüche, wobei die Blattfederlaschenabschnitte (10) der Grundplatte (4) in radialer Richtung (17) entlang der äußeren Mantelfläche der Grundplatte (4) angeordnet sind und wobei die Blattfederlaschenabschnitte (11) des Nockenrings (5) in radialer Richtung (17) entlang der äußeren Mantelfläche des Nockenrings (5) angeordnet sind.

4. Druckplattenbaugruppe (1) gemäß einem der vorherigen Ansprüche, wobei die Blattfederlaschenabschnitte (10) der Grundplatte und die Blattfederlaschenabschnitte (11) des Nockenrings in einem zusammengesetzten Zustand der Grundplatte (4) mit dem Nockenring (5) aufeinander liegen.

5. Druckplattenbaugruppe (1) gemäß einem der Ansprüche 2 bis 4, wobei die Verbindungsmittel (12) in Aussparungen der Blattfederlaschenabschnitte (10, 11) eingebracht sind, um die Grundplatte (4) mit dem Nockenring (5) zu verbinden.

6. Druckplattenbaugruppe (1) gemäß Anspruch 5, wobei die Verbindungsmittel (12) Blattfederniete sind.

## Claims

1. Pressure plate assembly (1) having at least one clutch cover (2), at least one pressing plate (3) which is arranged at least partially within the clutch cover (2), is attached fixedly to the latter via leaf springs (9) so as to rotate with it, and can be moved to a limited extent in the axial direction (16) of the pressure plate assembly (1) in order to clamp a clutch disc in a frictionally locking manner between the pressing plate (3) and a counterpressure plate, and having at least one lever element (6) which is mounted on the clutch cover (2) such that it can be tilted via a pivot bearing, the pressing plate (3) having a base plate (4) with first leaf spring bracket sections (10), **characterized in that**, furthermore, the pressing plate (3) has a cam ring (5) with second leaf spring bracket sections (11), at least one of the leaf springs (9) being connected fixedly to at least one of the first leaf spring bracket sections (10) and at least one of the second leaf spring bracket sections (11) of the pressing plate (3).

2. Pressure plate assembly (1) according to Claim 1, the connection of the leaf springs (9) to the first leaf spring bracket section (10) and the second leaf spring bracket section (11) of the pressing plate (3) taking place by way of a connecting means (12).

3. Pressure plate assembly (1) according to either of the preceding claims, the leaf spring bracket sections (10) of the main plate (4) being arranged in the radial direction (17) along the outer circumferential face of the main plate (4), and the leaf spring bracket sections (11) of the cam ring (5) being arranged in the radial direction (17) along the outer circumferential face of the cam ring (5).

4. Pressure plate assembly (1) according to one of the preceding claims, the leaf spring bracket sections (10) of the base plate and the leaf spring bracket sections (11) of the cam ring lying on one another in an assembled state of the base plate (4) with the cam ring (5).

5. Pressure plate assembly (1) according to one of Claims 2 to 4, the connecting means (12) being introduced into cut-outs of the leaf spring bracket sections (10, 11), in order to connect the base plate (4) to the cam ring (5).

6. Pressure plate assembly (1) according to Claim 5, the connecting means (12) being leaf spring rivets.

## Revendications

1. Module à plaque de pression (1) comprenant au moins un couvercle d'embrayage (2), au moins une plaque de pressage (3) disposée au moins en partie à l'intérieur du couvercle d'embrayage (2), reliée de manière solidaire en rotation par le biais de ressorts à lame (9) et déplaçable de manière limitée dans la direction axiale (16) du module à plaque de pression (1), pour serrer par engagement par friction un disque d'embrayage entre la plaque de pressage (3) et une plaque de pression conjuguée, et au moins un élément de levier (6) qui est supporté au moyen d'un palier pivotant de manière à pouvoir basculer sur le couvercle d'embrayage (2), la plaque de pressage (3) présentant une plaque de base (4) avec des premières portions de pattes de ressort à lame (10), **caractérisé en ce que** la plaque de pressage (3) présente en outre un anneau de came (5) avec des deuxièmes portions de pattes de ressort à lame (11), au moins l'un des ressorts à lame (9) étant connecté fixement à au moins l'une des premières portions de pattes de ressort à lame (10) et à au moins l'une des deuxièmes portions de pattes de ressort à lame (11) de la plaque de pressage (3).

2. Module à plaque de pression (1) selon la revendication 1, dans lequel la connexion du ressort à lame (9) à la première portion de patte de ressort à lame (10) et à la deuxième portion de patte de ressort à lame (11) de la plaque de pressage (3) s'effectue par un moyen de connexion (12) .

3. Module à plaque de pression (1) selon l'une quelconque des revendications précédentes, dans lequel les portions de pattes de ressort à lame (10) de la plaque de base (4) sont disposées dans la direction radiale (17) le long de la surface d'enveloppe extérieure de la plaque de base (4) et dans lequel les portions de pattes de ressort à lame (11) de l'anneau de came (5) sont disposées dans la direction radiale (17) le long de la surface d'enveloppe extérieure de l'anneau de came (5) .

4. Module à plaque de pression (1) selon l'une quelconque des revendications précédentes, dans lequel les portions de pattes de ressort à lame (10) de la plaque de base et les portions de pattes de ressort à lame (11) de l'anneau de came sont superposées dans un état assemblé de la plaque de base (4) avec l'anneau de came (5).

5. Module à plaque de pression (1) selon l'une quelconque des revendications 2 à 4, dans lequel les moyens de connexion (12) sont introduits dans des évidements des portions de pattes de ressort à lame (10, 11) afin de relier la plaque de base (4) à l'anneau de came (5).

6. Module à plaque de pression (1) selon la revendication 5, dans lequel les moyens de connexion (12) sont des rivets de ressort à lame.
